Europäisches Patentamt

European Patent Office

Office européen des brevets

(19)

(11) Publication number: **0 114 473**
**B1**

(12) **EUROPEAN PATENT SPECIFICATION**

(45) Date of publication of patent specification: **03.02.88**

(51) Int. Cl.⁴: **B 23 K 9/12**

(21) Application number: **83307524.5**

(22) Date of filing: **09.12.83**

(54) Method of, and apparatus for, electric arc welding.

(30) Priority: **29.12.82 FI 824500**

(43) Date of publication of application:
**01.08.84 Bulletin 84/31**

(45) Publication of the grant of the patent:
**03.02.88 Bulletin 88/05**

(84) Designated Contracting States:
**DE FR GB SE**

(56) References cited:
**DE-A-1 946 691**
**DE-A-2 611 377**
**US-A-4 000 374**
**US-A-4 169 224**
**US-A-4 302 655**

(73) Proprietor: **KEMPPI OY**
**P.O. Box 13**
**SF-15810 Lahti 81 (FI)**

(72) Inventor: **Makimaa, Tapani**
**Okeroistentie 33**
**SF-15800 Lahti 80 (FI)**

(74) Representative: **Cross, Rupert Edward Blount**
**et al**
**BOULT, WADE & TENNANT 27 Furnival Street**
**London EC4A 1PQ (GB)**

Courier Press, Leamington Spa, England.

EP 0 114 473 B1

## Description

This invention relates to a method of, and apparatus for, electric arc welding.

In MIG/MAG electric arc welding in which a welding wire is fed to the workpiece by a welding gun, it is necessary for the free length of the wire, that is the length of the wire between the gun outlet and the workpiece, to be kept substantially constant.

In manual welding this is achieved by the skill of the welder, but with automatic welding a means of control of the free wire length is necessary. In automatic welding dimensional tolerances and unevenness in the workpiece may result in the welding gun outlet not being at all times at the required distance from the workpiece even though the welding gun is programmed in an attempt to achieve this.

In DE—A—2611377 there is disclosed a method in which the welding current is measured and the position of the welding gun relative to the workpiece controlled in dependence upon the measurement result. The total welding current is measured, and a disadvantage of this method is that the welding current is also dependent upon the wire feeding speed.

US—A—4169224 discloses a welding apparatus in which the actual welding current is compared with an electrical analogue of the characteristics of the apparatus when operating as desired, the comparison result being used to control the apparatus as required. A disadvantage of this apparatus is that the control method used is effective primarily only in the hot-arc range of operation.

US—A—4302655 discloses a welding apparatus in which the gun is oscillated and the welding current measured at two separate transverse locations spaced different distances from the centreline of the weld being produced, the two measured values being combined and the result compared with a predetermined rated value, any variation between the combined result and the rated value being used to control the apparatus as required. A disadvantage of this apparatus is that it is relatively complex.

In DE—A—1946691 there is disclosed a welding apparatus including means to control the speed at which the welding wire is fed to the workpiece by the welding gun, the control being affected in dependence upon the relationship between the short-circuit period and the arc-on period which together make up each cycle of operation of the apparatus.

US—A—4000374 discloses a short-circuit arc welding apparatus in which the mean arc power during each arc-on period is determined and compared with a reference value, the apparatus being controlled in dependence upon such comparison so as to maintain the mean arc power substantially constant.

According to this invention there is provided a method of electric arc welding in which a welding wire is fed to a workpiece by a welding gun, characterised in that a parameter related to the value of the voltage across the free length of the wire between the gun and the workpiece is measured during a time in each short-circuit bead-forming period, the measure value being used to control the gun to maintain said free wire length substantially constant.

This invention is based on observations which show that changes in the voltage and current during each short-circuit bead-forming period are dependent upon the free length then existing. At the beginning of such a period the voltage and current are at minimum values from which they rise to maximum values at the end of the period, that is at the beginning of the arc-on period, a plot of voltage rise showing different curves for different free wire lengths.

Thus, by measuring a parameter of the voltage during each short-circuit bead-forming period, which parameter can be the instantaneous value of the voltage, the average value of the voltage over a time within the period, or the rate of change of the value of the voltage over a time within the period, an indication of the free wire length is obtained which indication can be used to produce a control signal used to return the free wire length to the desired length.

Preferably welding is effected in the hot-arc range, the conditions being changed temporarily such that welding is effected in the short-arc range at least during said time.

Also according to this invention there is provided apparatus for carrying out the method of the invention, characterised by a comparator to which the welding voltage is supplied and responsive to beginning of a short-circuit bead-forming period; delay means triggered by response of said comparator; a switch operated by said delay means and arranged to supply the welding voltage to a control signal generator means which in response to receipt of the welding voltage functions to produce a control signal operative to effect said control.

This invention will now be described by way of example with reference to the drawing, in which:—

Figure 1 diagrammatically illustrates a welding gun nozzle and an associated workpiece;

Figure 2a is a diagram illustrating the dependence upon free wire length of the voltage during a short-circuit bead-forming period with an arrangement as shown in Figure 1;

Figure 2b is a diagram illustrating the current flow during a short-circuit bead-forming period with an arrangement as shown in Figure 1; and

Figure 3 is a block diagram of an apparatus for carrying out the method of the invention.

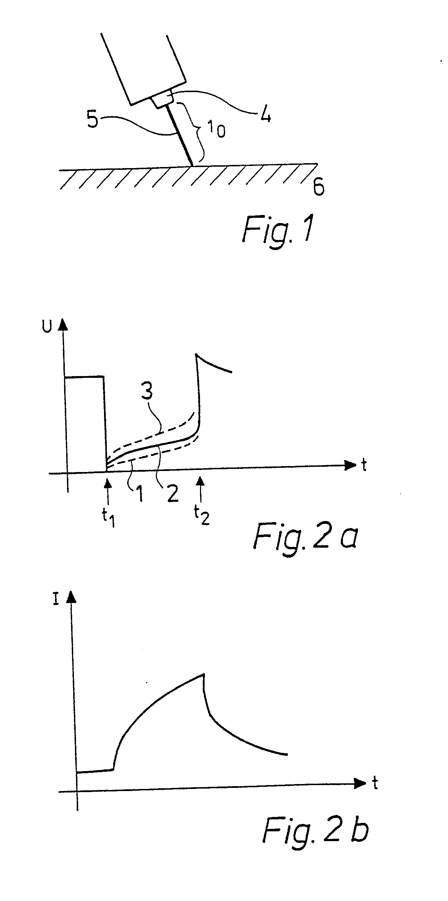

Figure 1 shows an arc welding gun nozzle 4 from which a welding wire 5 is fed to a workpiece 6 during a welding operation, in known manner. The length of wire $l_0$ between the nozzle 4 and the workpiece 6 is referred to as the free wire length.

As shown in Figure 2a, in which the welding voltage V is plotted against time t, at the beginning $t_1$ of a bead-forming period the short circuit occurring causes the voltage to fall to substantially zero from which it rises to a maximum at the end $t_2$ of the bead-forming period. The curve followed by the value of the voltage between $t_1$ and $t_2$ is dependent upon the free wire length ($l_0$ in Figure 1) such that for a relatively short length curve 1 is followed, for a normal length curve 2 is followed, while for a relatively long length curve 3 is followed.

Figure 2b shows how the current I rises with time t over the bead-forming period $t_1$ to $t_2$ in Figure 2a.

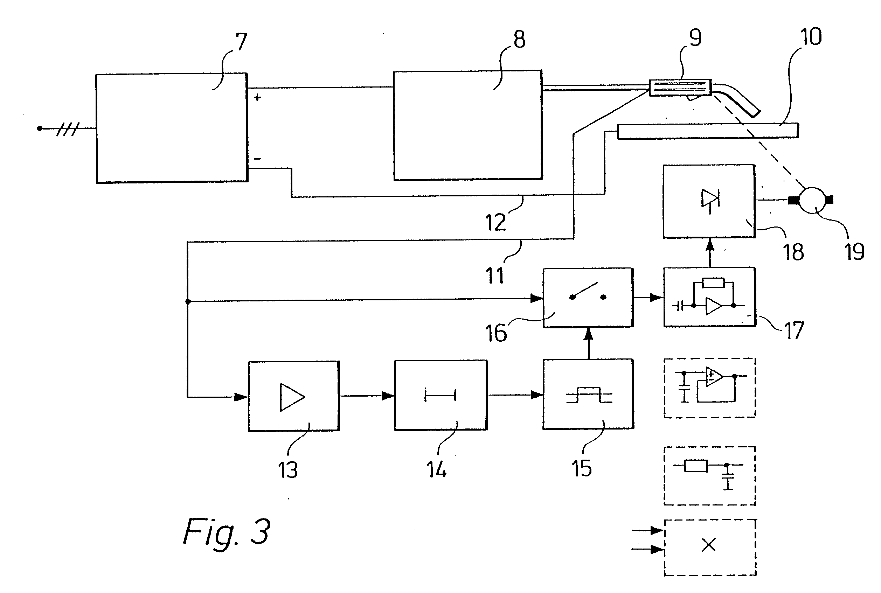

Referring now to Figure 3, this shows a power supply 7, a welding wire feeding device 8, a welding gun 9 and a workpiece 10 to which wire (not shown) is fed by the device 8 through the gun 9 the free length of the wire being dependent upon the spacing of the gun 9 from the workpiece 10.

The workpiece 10 is connected to the power supply 7 by a wire 12 while the gun 9 is connected by a wire 11 to a comparator 13 responsive to the welding voltage across the free wire length between the gun 9 and the workpiece 10 falling to a minimum value as occurs at the beginning of a bead-forming period (Figure 2a).

Response by the comparator 13 triggers a delay device 14 which after its predetermined delay triggers a monostable device 15 which in turn closes a switch 16 for the period for which the device 15 is in its unstable condition. The delay device 14 and the monostable device 15 are such that their combined time of operation is within the bead-forming period ($t_1$ to $T_2$ in Figure 2a).

During closure of the switch 16 the welding voltage value is fed from wire 11 through the switch 16 to a differentiator device 17 which determines the rate of change of the voltage value during the time of closure of the switch 16.

From the measured rate of change in the voltage value the free wire length is determined in dependence upon the expected rate of change as expected from the diagram of Figure 2a, and the differentiator 17 provides a proportional control signal to a control device 18 which in turn operates a servomotor 19 as necessary to move the gun 9 to achieve the desired free wire length.

Figure 3 shows, in dashed lines, a holding device used in place of the differentiator 17 when the instantaneous value of the welding voltage is used instead of the rate of change thereof; and also a low pass filter used in place of the differentiator 17 when the average welding voltage over the time of closure of the switch 16 is used to effect the necessary control of the free wire length.

The apparatus can be modified such that in addition to the welding voltage the welding current is measured, a multiplication and holding device, also shown in dashed lines in Figure 3, being provided to which the two measured values are supplied whereby the necessary control of the free wire length is effected in dependence upon the momentary power, average power, or rate of change in power during the bead-forming period.

## Claims

1. A method of electric arc welding in which a welding wire (5) is fed to a workpiece (10) by a welding gun (9), characterised in that a parameter related to the value of the voltage across the free length (10) of the wire (5) between the gun (9) and the workpiece (10) is measured during a time in each short-circuit bead-forming period, the measured value being used to control the gun (9) to maintain said free wire length (10) substantially constant.

2. A method as claimed in Claim 1, characterised in that the voltage parameter measured is an instantaneous value of the voltage within said period.

3. A method as claimed in Claim 1, characterised in that the voltage parameter measured is the average value of the voltage over a time within said period.

4. A method as claimed in Claim 1, characterised in that the voltage parameter measured is the rate of change of the value of the voltage over a time within said period.

5. A method as claimed in Claim 2, characterised in that the welding current is also measured, the two measured values being combined to give an indication of the instantaneous power, which is used to effect said control.

6. A method as claimed in Claim 3, characterised in that the welding current is also measured, the two measured values being combined to give an indication of the average power, which is used to effect said control.

7. A method as claimed in Claim 4, characterised in that the welding current is also measured, the two measured values being combined to give an indication of the rate of change of power, which is used to effect said control.

8. A method as claimed in any preceding claim, characterised in that welding is effected in the hot-arc range, the conditions being changed temporarily such that welding is effected in the short-arc range at least during said time.

9. Apparatus for carrying out a method as claimed in Claim 1, characterised by a comparator (13) to which the welding voltage is supplied and responsive to beginning of a short-circuit bead-forming period; delay means (14, 15) triggered by response of said comparator (13); a switch (16) operated by said delay means (14, 15) and arranged to supply the welding voltage to a control signal generator means (17) which in response to receipt of the welding voltage functions to produce a control signal operative to effect said control.

10. Apparatus as claimed in Claim 9, characterised in that said delay means (14) comprises a delay device (14) triggered by said comparator (13) and a monostable device (15) triggered by said delay device (14) at the end of its delay period, the monostable device (15) effecting operation of said switch (16) for the time for which said monostable device (15) is in its unstable condition.

11. Apparatus as claimed in Claim 9 or Claim 10, characterised in that said control signal generator means comprises a differentiator device (17).

12. Apparatus as claimed in Claim 9 or Claim 10, characterised in that said control signal generator means comprises a holding device.

13. Apparatus as claimed in Claim 9 or Claim 10, characterised in that said control signal generator means comprises a low pass filter.

14. Apparatus as claimed in any one of Claims 9 to 13, characterised by means to measure the welding current, said control signal generator means being responsive to receipt of both said measured voltage and current values.

## Patentansprüche

1. Verfahren zum elektrischen Lichtbogenschweißen, bei dem ein Schweißdraht (5) durch eine Schweißpistole (9) einem Werkstück (10) zugeführt wird,

dadurch gekennzeichnet,

daß ein Parameter, der auf den Wert der Spannung über die freie Länge ($l_0$) des Drahtes (5) zwischen der Pistole (9) und dem Werkstück (10) bezogen ist, während einer Zeitdauer in jeder Kurzschluß-Schweißperlenbildeperiode gemessen, und der gemessene Wert zur Steuerung der Pistole (9) benutzt wird, um die freie Drahtlänge ($l_0$) im wesentlichen konstant zu halten.

2. Verfahren nach Anspruch 1, dadurch gekennzeichnet, daß der gemessene Spannungsparameter ein augenblicklicher Wert der Spannung innerhalb der genannten Periode ist.

3. Verfahren nach Anspruch 1, dadurch gekennzeichnet, daß der gemessene Spannungsparameter der Durchschnittswert der Spannung während einer Zeitdauer in der genannten Periode ist.

4. Verfahren nach Anspruch 1, dadurch gekennzeichnet, daß der gemessene Spannungsparameter der Änderungsgrad des Spannungswertes während einer Zeitdauer in der genannten Periode ist.

5. Verfahren nach Anspruch 2, dadurch gekennzeichnet, daß auch der Schweißstrom gemessen wird und die beiden gemessenen Werte kombiniert werden, um eine Angabe der augenblicklichen Leistung zu ergeben, die zur Erzielung der genannten Steuerung benutzt wird.

6. Verfahren nach Anspruch 3, dadurch gekennzeichnet, daß auch der Schweißstrom gemessen wird und die beiden gemessenen Werte kombiniert werden, um eine Angabe der Durchschnittsleistung zu ergeben, die zur Erzielung der genannten Steuerung benutzt wird.

7. Verfahren nach Anspruch 4, dadurch gekennzeichnet, daß auch der Schweißstrom gemessen wird und die beiden gemessenen Werte kombiniert werden, um eine Angabe des Änderungsgrades der Leistung zu ergeben, der zur Erzielung der genannten Kontrolle benutzt wird.

8. Verfahren nach einem der voranstehenden Ansprüche, dadurch gekennzeichnet, daß das Schweißen im Heißlichtbogenbereich ausgeführt wird und die Bedingungen zeitweise geändert werden, so daß das Schweißen zumindest während der genannten Zeitdauer im Kurzlichtbogenbereich vollzogen wird.

9. Vorrichtung zur Durchführung des Verfahrens nach Anspruch 1, gekennzeichnet durch einen Komparator (13), an den die Schweißspannung angelegt wird und der auf den Beginn einer Kurzschluß-Schweißperlenbildeperiode anspricht; Verzögerungsmittel (14, 15), die durch das Ansprechen des Komparators (13) getriggert sind; und einen Schalter (16), der durch die Verzögerungsmittel (14, 15) betätigt und so angeordnet ist, daß er die Schweißspannung an einen Steuersignalgenerator (17) anlegt, der in Abhängigkeit vom Empfang der Schweißspannung die Erzeugung eines Steuersignals vollzieht, welches die Durchführung der genannten Steuerung bewirkt.

10. Vorrichtung nach Anspruch 9, dadurch gekennzeichnet, daß die Verzögerungsmittel (14) eine vom Komparator (13) getriggerte Verzögerungseinrichtung (14) und eine am Ende ihrer Verzögerungsperiode von der verzögerungseinrichtung (14) getriggerte monostabile Einrichtung (15) umfaßt, wobei die monostabile Einrichtung (15) die Betätigung des Schalters (16) während derjenigen Zeitdauer bewirkt, zu welcher die monostabile Einrichtung (15) in ihrem instabilen Zustand ist.

11. Vorrichtung nach Anspruch 9 oder 10, dadurch gekennzeichnet, daß der Steuersignalgenerator eine Differentiatoreinrichtung (17) umfaßt.

12. Vorrichtung nach Anspruch 9 oder 10, dadurch gekennzeichnet, daß der Steuersignalgenerator eine Halteeinrichtung umfaßt.

13. Vorrichtung nach Anspruch 9 oder 10, dadurch gekennzeichnet, daß der Steuersignalgenerator ein Tiefpassfilter umfaßt.

14. Vorrichtung nach einem der Ansprüche 9—13, gekennzeichnet durch Mittel zur Messung des Schweißstromes, wobei der Steuersignalgenerator auf den Empfang sowohl der gemessenen Spannungs- als auch Stromwerte anspricht.

## Revendications

1. Procédé de soudage à l'arc électrique, dans lequel un fil de soudure (5) est amené à une pièce (10) par un pistolet de soudage (9), caractérisé en ce qu'un paramètre, en relation avec la valeur de la tension aux bornes de la longueur libre ($l_0$) du fil (5) entre le pistolet (9) et la pièce (10) est mesuré pendant un certain laps de temps au cours de chaque période de court-circuit de formation de cordon, la valeur mesurée étant utilisée pour commander le pistolet (9) et maintenir ladite longueur libre ($l_0$) du fil sensiblement constante.

2. Procédé selon la revendication 1, caractérisé en ce que le paramètre de tension mesuré est une valeur instantanée de la tension pendant ladite période.

3. Procédé selon la revendication 1, caractérisé en ce que le paramètre de tension mesuré est la valeur moyenne de la tension pendant un certain laps de temps au cours de ladite période.

4. Procédé selon la revendication 1, caractérisé en ce que le paramètre de tension mesuré est le taux de variation de la valeur de la tension pendant un certain laps de temps au cours de ladite période.

5. Procédé selon la revendication 2, caractérisé en ce que le courant de soudage est également mesuré, les deux valeurs mesurées étant combinées pour donner une indication de la puissance instantanée, qui est utilisée pour effectuer ladite commande.

6. Procédé selon la revendication 3, caractérisé en ce que le courant de soudage est également mesuré, les deux valeurs mesurées étant combinées pour donner une indication de la puissance moyenne, qui est utilisée pour effectuer ladite commande.

7. Procédé selon la revendication 4, caractérisé en ce que le courant de soudage est également mesuré, les deux valeurs mesurées étant combinées pour donner une indication du taux de variation de la puissance, qui est utilisé pour effectuer ladite commande.

8. Procédé selon l'une quelconque des revendications précédentes, caractérisé en ce que le soudage est effectué en régime d'arc chaud, les conditions étant modifiées temporairement de manière que le soudage soit effectué en régime d'arc court au moins pendant ledit laps de temps.

9. Appareil pour la mise en oeuvre d'un procédé selon la revendication 1, caractérisé par un comparateur (13) auquel est fournie la tension de soudage et agissant au début d'une période de court-circuit de formation de cordon, des moyens de temporisation (14, 15) déclenchés par l'action dudit comparateur (13), un commutateur (16) actionné par lesdits moyens de temporisation (14, 15) et adaptés à fournir la tension de soudage à des moyens générateurs de signal de commande (17) qui, en réponse à la réception de la tension de soudage, fonctionnent pour produire un signal de commande agissant pour effectuer ladite commande;

10. Appareil selon la revendication 9, caractérisé en ce que lesdits moyens de temporisation (14) comportent un dispositif de temporisation (14) déclenché par ledit comparateur (13) et un dispositif monostable (15) déclenché par ledit dispositif de temporisation (14) à la fin de sa période de temporisation, le dispositif monostable (15) commandant le fonctionnement dudit commutateur (16) pendant le temps pendant lequel ledit dispositif monostable (15) est dans son état instable.

11. Appareil selon la revendication 9 ou la revendication 10, caractérisé en ce que lesdits moyens générateurs de signal de commande comportent un dispositif de différentiation (17).

12. Appareil selon la revendication 9 ou la revendication 10, caractérisé en ce que lesdits moyens générateurs de signal de commande comportent un dispositif de maintien.

13. Appareil selon la revendication 9 ou la revendication 10, caractérisé en ce que lesdits moyens générateurs de signal de commande comportent un filtre passe-bas.

14. Appareil selon l'une quelconque des revendications 9 à 13, caractérisé par des moyens pour mesurer le courant de soudage, lesdits moyens générateurs de signal de commande réagissant à la réception à la fois desdites valeurs mesurées de tension et de courant.

Fig. 1

Fig. 2 a

Fig. 2 b

1

*Fig. 3*